# EUROPEAN PATENT APPLICATION

(11) **EP 3 104 337 A1**
(43) Date of publication of application: **14.12.2016**
(21) Application number: 15171699.0
(22) Date of filing: 11.06.2015
(51) Int. Cl.: G06T 19/20

(54) **VISUALISING COMPUTER MODELS OF URBAN ENVIRONMENTS**

(71) Applicant: Utopian City Scape Holding ApS, 1471 København K (DK)
(72) Inventor: Jensen, Jacob Østergaard, 2100 København Ø (DK)
(74) Representative: Awapatent A/S

(57) **Abstract**

Disclosed is a computer implemented method for visualising / rendering a view of a computer model of an urban environment through a virtual camera. The computer model comprises at least a first building and a second building. The first building and the second building are real existing buildings. The method selects based on at least the position of the virtual camera within the computer model of the urban environment, to use photo textures and / or generic textures for rendering / visualising at least a first part of the computer model of the first building.

## Description

### Field

The present invention relates to computer implemented methods and computer program products for visualisation / rendering computer models, specifically for visualisation / rendering 3D models of urban environments.

### Background

Computer models of urban environments are an important tool for city planning as it allows architects and city planners to experience changes before they are made. This allows new buildings to be better adapted to their surroundings.

Furthermore, computer models of urban environment may be made available to the public through the internet. This may be done by enabling the public to navigate around in the computer model through their web browser. This democratises city planning as the people using an urban area may experience and react to suggested changes.

Urban environments may however be very complex comprising hundreds of structures such as buildings, roads, trees etc. This makes the computer models correspondingly complex.

The value of the models are closely linked to their precision. To represent existing buildings as precisely as possible photo textures are typically used. The photo textures are obtained by taking photographs of the existing buildings. The photographs may be taken from the ground or be aerial photos taken from of an airplane. Consequently, the computer models of the buildings in the urban environment each have a unique photo texture. However, handling the potential hundreds of unique photo textures requires significant computational resources such as computer processing resources and especially computer memory resources for storing the large textures. Furthermore, if the computer models are made available to users over the internet the download time for downloading the potential hundreds of textures may be significant.

US20100202682 discloses a method for texturizing virtual three-dimensional objects, particularly virtual three-dimensional building objects and city models with a photographic image (1) of a real object, particularly of a picture of a façade. The method is characterized by the following steps: Projecting the photographic image (1) onto a virtual surface (2) of the virtual three-dimensional object to produce a raw texture; localizing a raw texture element (3) in the raw texture by using a classification method; computer-compatible description of the localized raw texture element by a formal feature set for the raw texture element, particularly a feature vector; comparing the formal feature set of the raw texture element with each feature set of predefined library elements (4), and determining degrees of similarity between the raw texture element and each library element; replacing the localized raw texture element with at least one library element when a predefined degree of similarity is present, and reshaping the raw texture into a generalized texture (5) of the virtual object by replacing all raw texture elements with library elements.

This results in a reduction of the required memory resources. However, details will be lost from the photographic images.

Consequently, it remains a problem to reduce the computational resources needed for visualising computer models of urban environment without reducing the accuracy and quality of the photo textures.

### Summary

According to a first aspect, the invention relates to a computer implemented method for visualising / rendering a view of a computer model of an urban environment through a virtual camera, the computer model comprising at least a first building and a second building, wherein the first building and the second building are real existing buildings, the method comprising the steps of:
- (a) storing one or more geometric computer models of the first building and one or more geometric computer models of the second building;
- (b) storing a plurality of generic textures for texturing geometric computer models of buildings;
- (c) storing generic texture mapping data for mapping a first subset set of the plurality of generic textures to at least one of the one or more geometric computer models of the first building and a second subset of the plurality of generic textures to at least one of the one or more geometric computer models of the second building, wherein the first subset and the second subset have at least one generic texture in common;
characterized in that the method further comprises the steps of:
- (d) storing a first photo texture, the first photo texture is generated from one or more real photographs of the first building;
- (e) storing photo texture mapping data for mapping the first photo texture to at least one of theone or more geometric computer models of the first building; and
- (f) selecting, based on at least the position of the virtual camera within the computer model of the urban environment, to use the first photo texture and / or the first subset of generic textures for rendering / visualising at least a first part of at least one of the one or more geometric computer models of the first building.

Consequently, generic textures may be used for buildings having a small visible foot print and photo textures for buildings having a large visible foot print whereby the memory requirements may be lowered with no or only minimal loss of detail.

The geometric model of the buildings is typically a polygon mesh, i.e. a collection of vertices, edges and faces that defines the shape. All buildings are preferably assigned with both generic textures and photo textures and step (f) is repeated for each building.

A plurality of geometric computer models may be generated for each building at different level of details (LOD), where a geometric computer model having a low LOD is mapped with generic textures and a geometric computer model having a high LOD is mapped with photo textures. Thus in some embodiments, the method in step (f) switches between both models with different LOD and between using generic textures and photo textures. However, in some embodiments only a single geometric computer model is stored of each building, wherein the method in step (f) only switches between using generic textures and photo textures on the same geometric computer model.

The computer model of the urban environment may comprise a large number of buildings such as at least 10, 25, 50, 100, or 250 buildings. The generic textures may be generated from photos and / or artificially generated by computer code. The generic texture mapping data is preferably configured to tile one or more of the generic textures of the first subset on one or more surfaces of the geometric computer model of the first building e.g. a generic texture of the first subset may represent a brick and the generic textures mapping data may be configured to tile (repeat vertically and horizontally) the brick on a surface of the first building in order to represent a wall. The photo texture mapping data is configured to map the first photo texture to the geometric computer model of the first building without tiling the first photo texture. The generic textures and / or the photo textures may stored in individual data files or in one or more texture atlases.

The photographs used to generate the first photo texture may be taken from the ground or be aerial photos. The photographs may be pre-processed to counteract any perspective distortions. The first photo texture may be generated by 'stitching' together photographs of the first building.

The selection in step (f) is preferably done in a manner so that photo textures are used when the first part of the geometric computer model of the first building is covering a relative 'large' part of the rendered / visualised view, and generic textures are used when the first part of the geometric computer model of the first building is covering a relative 'small' part of the rendered / visualised view. In practice this may be done by using photo textures when the distance between the first part of the geometric computer model of the first building is below a selected threshold and using generic textures when the distance is above the selected threshold. The threshold may be selected dependent on the resolution of the view e.g. the threshold may be lower when the resolution of the view is high compared to when the resolution of the view is low.

Alternatively, more complex non-circular zones may be defined in proximity of the first part of the geometric computer model of the first building, and wherein the first photo texture is used when the virtual camera is positioned inside the defined zone and generic textures are used when the virtual camera is positioned outside the defined zones.

In some embodiments, step (f) comprises selecting, based on at least the position of the virtual camera within the computer model of the urban environment, to use the first photo texture, a mix of the first photo texture and the first subset of generic textures or the first subset of generic textures for rendering / visualising at least a first part of at least one of the one or more geometric computer models of the first building.

Consequently, the transition from generic textures to photo textures may become smoother when a user manoeuvres the virtual camera around in the computer model.

In some embodiments, the ratio of the mix may be selected dependent on at least the position of the virtual camera in the computer model.

In some embodiments, the first photo texture is generated from a real photograph taken of a first part of the first building, wherein the method further comprises the steps of:
- storing a second photo texture, the second photo texture is generated from a real photograph taken of a second part of the first building; and
   wherein the photo texture mapping data maps the first photo texture to the first part of the at least one of the one or more geometric computer models of the first building and the second photo texture to the second part of the at least one of the one or more geometric computer models of the first building; the generic texture mapping data maps the first subset to the first part of the at least one of the one or more geometric computer models of the first building and furthermore a third subset of the plurality of generic textures to the second part of the at least one of the one or more geometric computer models of the first building; wherein step (f) comprises:
- selecting for the first part of the at least one of the one or more geometric computer models of the first building, based on at least the position of the virtual camera within the computer model of the urban environment, to use the first photo texture and / or the first subset of generic textures for rendering / visualising the first part; and selecting, based on at least the position of the virtual camera within the computer model of the urban environment, to use the second photo texture and / or the third subset of generic textures for rendering / visualising the second part of the at least one of the one or more geometric computer models of the first building.

Consequently, the needed memory resources may be lowered further as only the photo texture needed for rendering / visualising the part of the computer model being closest to the virtual camera need to be loaded.

In some embodiments, the one or more geometric computer models of the first building and the one or more geometric computer models of the second building are auto generated from recorded physical data.

The recorded data may be lidar data, or photographs. The data may be recorded from the ground or from an airplane.

In some embodiments, the first subset of generic textures are auto generated and or auto selected based on the first photo texture.

In some embodiments, the computer model is visualised / rendered on a user terminal configured to allow user to move and rotate the virtual camera; the user terminal being connected to a wide area network (WAN) and wherein the photo textures are stored on a computer server connected to the WAN; and the computer server being configured to transmit selected photo textures to the user terminal dependent on at least the position of the virtual camera in the computer model.

Consequently, the download time needed before a user can begin to experience the computer model may be lowered.

The WAN may be the internet. Examples of user terminals are Personal computers, laptops, smart phones, tablets, etc.

According to a second aspect the invention relates to a method of generating a computer model of an existing building, said computer model being suitable for use in a computer implemented method as disclosed in relation to the first aspect of the invention, wherein the method comprises the steps of:
- recording using a camera one or more photographs of the existing building and using said one or more recorded photographs to create a first photo texture;
- generating using a computer a geometric computer model of the first building;
- generating using a computer photo texture mapping data for mapping the first photo texture to the geometric computer model of the first building;
- selecting a first subset of a plurality of generic textures for texturing building;
- generating using a computer generic texture mapping data for mapping the first subset set of the plurality of generic textures to the geometric computer model of the first building
- defining using a computer a set of rules that determines, dependent on the distance from a virtual camera to the geometric computer model and / or the orientation of the virtual camera with respect to the geometric computer model, if the first photo texture or the first subset of generic textures is to be used for rending / visualising the computer model.

All of the above steps may be performed manually or automatically e.g. the geometric computer model may be generated automatically from lidar data or it may be modelled manually by a computer artist using e.g. structural drawings of the building.

According to a third aspect the invention relates to a computer program product comprising program code means adapted to cause a data processing system to perform the steps of the method disclosed in relation to the first aspect of the invention, when said program code means are executed on the data processing system.

In some embodiments, said computer program product comprises a non-transitory computer-readable medium having stored thereon the program code means.

According to a fourth aspect, the invention relates to a data processing system configured to perform the method disclosed in relation to the first aspect of the invention.

The different aspects of the present invention can be implemented in different ways including as computer implemented methods for visualising / rendering a view of a computer model, methods of generating a computer model of an existing building, and to computer program products described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows a flowchart for a computer implemented method for visualising / rendering a view of a computer model of an urban environment according to an embodiment of the invention.
Figs.2a-b illustrate the principle behind generic textures and photo textures.
Fig. 3 illustrates how the selection between generic textures and photo textures may be done according to an embodiment of the invention.
Fig. 4 illustrates how the selection between generic textures and photo textures may be done according to an embodiment of the invention.
Fig. 5 shows a building comprising a plurality of parts each part being textured with both generic textures and photo textures.

### Detailed description

In the following description, reference is made to the accompanying figures, which show by way of illustration how the invention may be practiced.

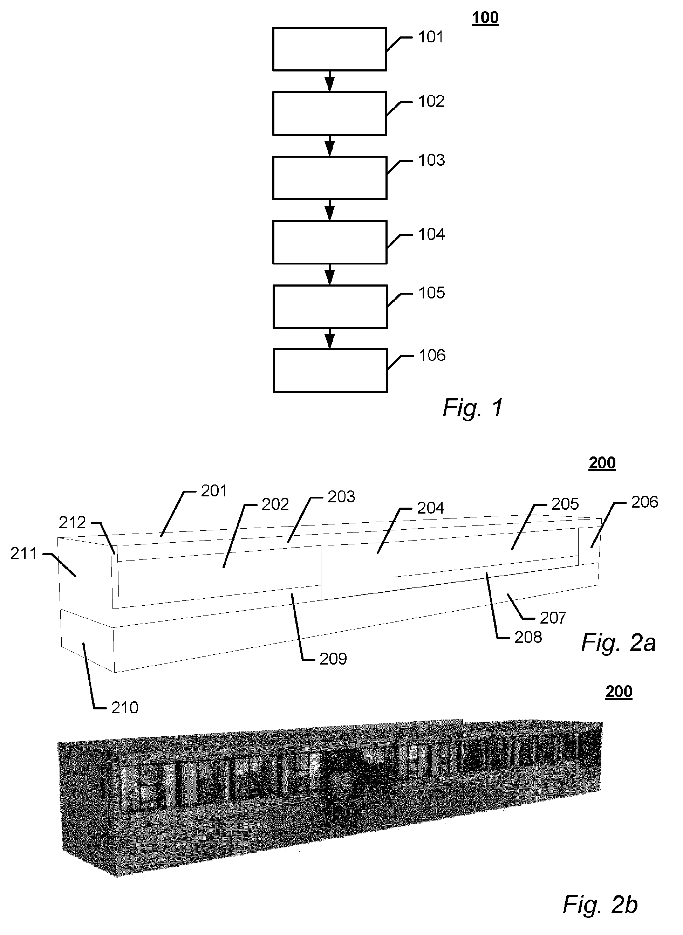

Fig. 1 shows a flowchart for a computer implemented method for visualising / rendering a view of a computer model of an urban environment. The computer model comprises at least a first building and a second building and preferably at least 25, 50, 100 or 250 building. The first building and the second building are real existing buildings. In the first step of the method 101 a geometric computer model of the first building and a geometric computer model of the second building are stored. Next in step 102, a plurality of generic textures for texturing computer models of buildings are stored. Then in step 103, generic texture mapping data for mapping a first subset set of the plurality of generic textures to the geometric computer model of the first building and a second subset of the plurality of generic textures to the geometric computer model of the second building are stored, where the first subset and the second subset have at least one generic texture in common. Then, in step 104, a first photo texture is generated and stored. The first photo texture is generated from one or more real photographs of the first building. Next, in step 105, photo texture mapping data for mapping the first photo texture to the geometric computer model of the first building is stored, and finally in step 106 the method selected based on at least the position of the virtual camera within the computer model of the urban environment, to use the first photo texture and / or the first subset of generic textures for rendering / visualising at least a first part of the geometric computer model of the first building.

Fig. 2a illustrates how generic texture mapping data may map a subset of a plurality of generic textures to a geometric computer model of a building, and how photo texture mapping data may map a photo texture to a geometric computer model. Fig. 2a and Fig. 2b show a perspective view of the geometric computer model of the building. Fig. 2a shows the model without textures and Fig. 2b shows the model with photo textures. The building comprises a plurality of different sections 201-212. Section 202 205 208 are window sections, sections 203 209 208 211 212 are brick sections, sections 207 210 are concrete sections, section 206 is a black section, and section 201 is a gray section. To texture the building with the generic textures, generic textures mapping data may indicate a subset of generic textures from a library of generic textures. In this example the subset consist of 5 different generic textures: a window texture, a brick texture, a concrete texture, a black texture, and a gray texture. The window texture may be an image of a single window. The generic texture mapping data is configured to texture sections 202 205 and 204 with the window texture. For each section the window texture is tilled in order to represent the true building as close as possible e.g. the window texture may be tiled 9 time horizontally and 1 time vertically for texturing the section 202. Correspondingly, the generic texture mapping data is configured to texture sections 203 208 209 211 and 212 with the brick texture, sections 207 and 220 with the concrete texture, section 206 withth black texture, and section 201 with the gray texture. By using generic textures the memory requirements for storing and processing the textures are lowered significantly as the resolution of the generic textures typically are much lower than the resolution of the photo textures. Furthermore, when a plurality of building are textured with the same generic textures the number of different textures are also lowered. However, generic textured computer models lack many details e.g. for section 202 each window will be identical, which is not the case for the true building. The photo texture mapping data is configured to map a photo texture onto the geometric computer model. The photo texture may be generated by stitching together photographs taken of the true building from each visible side. A photo textured model will have much more details compared to a model textured with generic textures, but the memory and processing requirements are significantly higher.

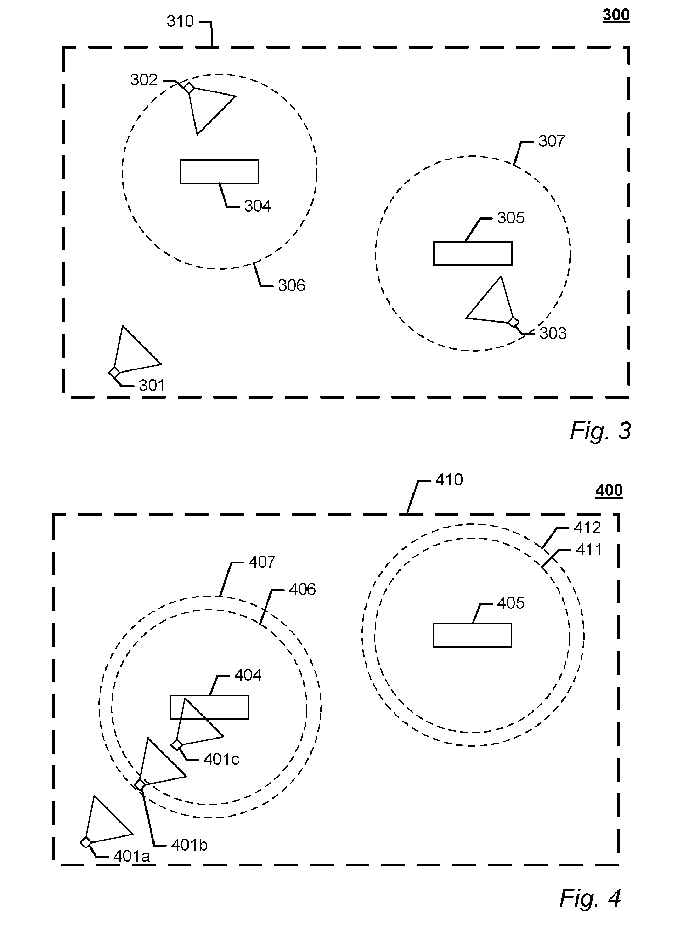

Fig. 3 illustrates how step 106 in the method disclose in relation to Fig.1 and / or step (f) in the method disclosed in relation to the first aspect of the invention may be carried out according to an embodiment of the invention. Shown is a top view of a computer model of an urban environment 300. In this embodiment, for simplicity, the computer model only comprises a first building 304 and a second building 305. The first and second building 304 305 each represent existing buildings and each are textured with both generic textures and photo textures. Shown is also a first virtual camera 301, a second virtual camera 302 and a third virtual camera 303. In this embodiment, the method selects for each building 304 305 dependent on the distance from the centre of each building to a virtual camera to use photo textures or generic textures for rendering visualising the building. The circles 306 307 illustrates the threshold for using photo textures selected for this embodiment. Thus, when a view through the camera 301 is rendered both buildings 304 305 will be rendered using generic textures, when a view is rendered through the camera 302 the first building will be rendered using photo textures and the second building will be rendered using generic textures, and when a view is rendered through the virtual camera 303 the first building 304 will be rendered using generic textures and the second building 305 will be rendered using photo textures.

Fig. 4 illustrates how step 106 in the method disclose in relation to Fig.1 and / or step (f) in the method disclosed in relation to the first aspect of the invention may be carried out according to an embodiment of the invention. Shown is a top view of a computer model of an urban environment 400. In this embodiment, again for simplicity, the computer model only comprises a first building 404 and a second building 405. The first and second building 404 405 each represent existing buildings and each are textured with both generic textures and photo textures. Shown is also a first virtual camera arranged at a first position 401 a a second position 401 b and a third position 401 c. In this embodiment the method selected based on the position of the virtual camera within the computer model of the urban environment 400, to use photo textures alone, a mix of photo textures and generic textures or generic textures alone for rendering / visualising the computer model of the buildings. For the first building 404 the method selects to use only generic textures for a virtual camera positioned outside the circle 407, a mix of photo textures and generic textures for a virtual camera positioned inside the circle 407 but outside the circle 406, and only photo textures for a virtual camera positioned inside the circle 406. Correspondingly for the second building 405 the method selects to use only generic textures for a virtual camera positioned outside the circle 412, a mix of photo textures and generic textures for a virtual camera positioned inside the circle 412 but outside the circle 411, and only photo textures for a virtual camera positioned inside the circle 411. Consequently, when the first virtual camera is arranged at the first position 401 a generic textures are used for rendering both the first and the second building 404 405, when the first virtual camera is arranged at the second position 401 b a mix of generic textures and photo textures are used for rendering the first building 404 and generic textures are used for rendering the second building 405, and when the first virtual camera is arranged at the third position 401 c photo textures are used for rendering the first building 404 and generic textures are used for rendering the second building 405.

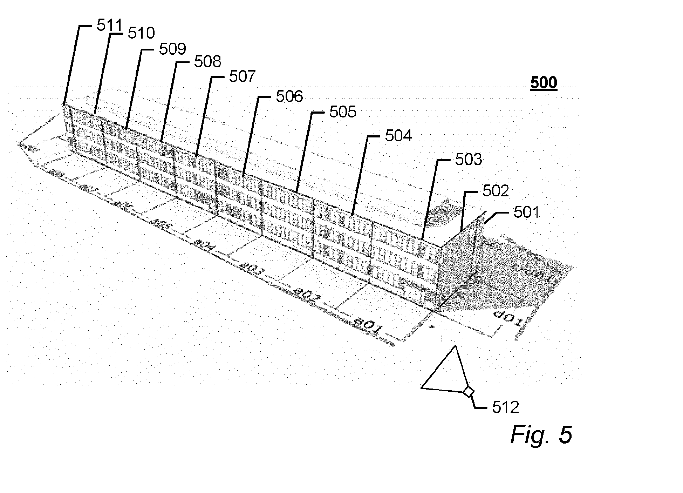

In some embodiments, the selection between generic textures and / or photo textures is done for individual parts of a building as illustrated in Fig. 5. Shown is a building 500 comprising a plurality of parts 501 - 511. Each part 501-511 is textured with both photo textures and generic textures and for each part of the building the method selects, dependent on the position of a virtual camera 512, to use photo textures and / or generic textures for rendering a view through the virtual camera 512 so that parts of the building that are close to the virtual camera 512 e.g. parts 501 502 503 504 are rendered using photo textures and parts of the that are far away from the camera are rendered using generic textures e.g. parts 507 508 509 510 511. Furthermore, parts of the building being at an intermediate distance to the virtual camera 512 may be rendered using a mix of generic textures and photo textures e.g. parts 505 506.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A computer implemented method for visualising / rendering a view of a computer model of an urban environment through a virtual camera, the computer model comprising at least a first building and a second building, wherein the first building and the second building are real existing buildings, the method comprising the steps of:
• (a) storing one or more geometric computer models of the first building and one or more geometric computer models of the second building;
• (b) storing a plurality of generic textures for texturing computer models of buildings;
• (c) storing generic texture mapping data for mapping a first subset set of the plurality of generic textures to at least one of the one or more geometric computer models of the first building and a second subset of the plurality of generic textures to at least one of the one or more geometric computer models of the second building, wherein the first subset and the second subset have at least one generic texture in common;
**characterized in that** the method further comprises the steps of:
• (d) storing a first photo texture, the first photo texture is generated from one or more real photographs of the first building;
• (e) storing photo texture mapping data for mapping the first photo texture to at least one of the one or more geometric computer models of the first building; and
• (f) selecting, based on at least the position of the virtual camera within the computer model of the urban environment, to use the first photo texture and / or the first subset of generic textures for rendering / visualising at least a first part of at least one of the one or more geometric computer models of the first building.

2. A computer implemented method according to claim 1, wherein step (f) comprises selecting, based on at least the position of the virtual camera within the computer model of the urban environment, to use the first photo texture, a mix of the first photo texture and the first subset of generic textures or the first subset of generic textures for rendering / visualising at least a first part of the at least one of the one or more geometric computer models of the first building.

3. A computer implemented method according to claim 2, wherein the ratio of the mix may be selected dependent on at least the position of the virtual camera in the computer model.

4. A computer implemented method according to any one of claims 1 to 3, wherein the first photo texture is generated from a real photograph taken of a first part of the first building, wherein the method further comprises the steps of:
• storing a second photo texture, the second photo texture is generated from a real photograph taken of a second part of the first building; and
wherein the photo texture mapping data maps the first photo texture to the first part of the at least one of the one or more geometric computer models of the first building and the second photo texture to the second part of the at least one of the one or more geometric computer models of the first building;
the generic texture mapping data maps the first subset to the first part of the at least one of the one or more geometric computer models of the first building and furthermore a third subset of the plurality of generic textures to the second part of at least one of the one or more geometric computer models of the first building; wherein step (f) comprises:
• selecting for the first part of the at least one of the one or more geometric computer models of the first building, based on at least the position of the virtual camera within the computer model of the urban environment, to use the first photo texture and / or the first subset of generic textures for rendering / visualising the first part; and selecting, based on at least the position of the virtual camera within the computer model of the urban environment, to use the second photo texture and / or the third subset of generic textures for rendering / visualising the second part of the at least one of the one or more geometric computer models of the first building.

5. A computer implemented method according to any one of claims 1 to 4, wherein the one or more geometric computer models of the first building and the one or more geometric computer models of the second building are auto generated from recorded physical data.

6. A computer implemented method according to any one of claims 1 to 4, wherein the first subset of generic textures is auto generated and or auto selected based on the first photo texture.

7. A computer implemented method according to any one of claims 1 to 6, wherein the computer model is visualised / rendered on a user terminal configured to allow user to move and rotate the virtual camera; the user terminal being connected to a wide area network (WAN) and wherein the photo textures are stored on a computer server connected to the WAN; and the computer server being configured to transmit selected photo textures to the user terminal dependent on at least the position of the virtual camera in the computer model.

8. A method of generating a computer model of an existing building, said computer model being suitable for use in a computer implemented method according to any one of claims 1 to 7, wherein the method comprises the steps of:
• recording using a camera one or more photographs of the existing building and using said one or more recorded photographs to create a first photo texture;
• generating using a computer a geometric computer model of the first building;
• generating using a computer photo texture mapping data for mapping the first photo texture to the geometric computer model of the first building;
• selecting a first subset of a plurality of generic textures for texturing building;
• generating using a computer generic texture mapping data for mapping the first subset set of the plurality of generic textures to the geometric computer model of the building
• defining using a computer a set of rules that determines, dependent on the distance from a virtual camera to the computer model and / or the orientation of the virtual camera with respect to the computer model, if the first photo texture or the first subset of generic textures is to be used for rending / visualising the computer model.

9. A computer program product comprising program code means adapted to cause a data processing system to perform the steps of a computer implemented method according to any one of claims 1 to 8, when said program code means are executed on the data processing system.

10. A computer program product according to claim 9, wherein said computer program product comprises a non-transitory computer-readable medium having stored thereon the program code means.

11. A data processing system configured to perform the steps of a computer implemented method according to any one of claims 1 to 8.
